# FASCICULE DE BREVET EUROPEEN

(11) **EP 0 583 176 B1**
(45) Date de publication et mention de la délivrance du brevet: **14.05.1997**
(21) Numéro de dépôt: 93401683.3
(22) Date de dépôt: 30.06.1993
(51) Int. Cl.: F42B 4/26, F42B 15/00, F02K 9/18, F02K 9/26

(54) **Leurre stabilisé et propulsé émettant dans l'infra-rouge**
Infrarotscheinziel mit Leitwerkstabilisierung und Eigenantrieb
Self-propelled stabilised infrared decoy

(30) Priorité: 11.08.1992 FR 9209897
(43) Date de publication de la demande: 16.02.1994
(73) Titulaire: SOCIETE NATIONALE DES POUDRES ET EXPLOSIFS, F-75181 Paris Cédex 04 (FR)
(72) Inventeur: Meili, Gérard, F-33000 Bordeaux (FR); Pinchot, Jean-Luc, F-33160 Saint Médard en Jalles (FR)
(74) Mandataire: Pech, Bernard

(56) Documents cités:
- EP-A- 0 309 097
- CH-A- 466 977
- DE-A- 2 063 653
- FR-A- 1 098 633
- US-A- 4 015 427

## Description

La présente invention se situe dans le domaine de la contre-mesures passive. Elle a pour but de protéger des plates-formes, telles que des aéronefs, lorsqu'elles sont attaquées par un missile autoguidé.

Cette protection se fait en attirant le missile à l'écart de la plate-forme à l'aide d'un leurre qui trompe l'autodirecteur du missile en se substituant à la plate-forme. L'autodirecteur du missile fonctionne soit dans l'infrarouge : le leurre doit produire une signature infrarouge équivalente à celle de la plate-forme, soit dans le domaine des ondes électromagnétiques : le leurre doit présenter alors une surface équivalente radar comparable à celle de la plate-forme.

Le leurre est plus particulièrement un objet, éjecté depuis un lance-leurres fixé sur la plate-forme à protéger. Le leurre suit une trajectoire sur laquelle il est éventuellement stabilisé et propulsé. Le leurre produit un rayonnement dans une direction privilégiée et préférentiellement ce rayonnement est dans l'infrarouge.

Il est connu d'utiliser pour réaliser ces leurres des blocs émissifs contenus dans une enceinte fermée par une tuyère ou un orifice formant tuyère comme décrit dans le brevet FR 2 294 422. Ces blocs sont fabriqués avec une substance pyrotechnique dont la combustion produit le rayonnement infrarouge.

Le leurre est dans un tube de lancement dont la bouche est dirigée vers l'arrière de l'avion. Le leurre y est disposé de telle sorte que son arrière soit du côté de la bouche du tube de lancement. Le leurre sera éjecté dans le lit du vent, son sens de déplacement quand il est propulsé est proche de celui de la plate-forme à protéger, du moins pendant les premiers instants de fonctionnement. Les parties avant et arrière du leurre sont repérées par rapport à son sens de déplacement sur sa trajectoire en phase propulsée.

Après la sortie du tube de lancement, le leurre est stabilisé sur sa trajectoire : c'est-à-dire qu'il n'a pas tendance à y être animé d'un mouvement désordonné et/ou tourbillonnaire. Le brevet EP 0 309 097 décrit la stabilisation du leurre par une masselote télescopique à l'avant du leurre.

Le bloc émissif du leurre est alors mis à feu. Les produits de combustion (gaz et particules) accélérés par la tuyère assurent d'une part la propulsion du leurre et d'autre part le rayonnement directif. Enfin la tuyère, en assurant l'effet directif, diminue aussi la sensibilité de la flamme au vent extérieur.

Un premier problème est que la tuyère de ce leurre présente des inconvénients, qui sont :
- présence d'une pièce mécanique supplémentaire, plus au moins compliquée et donc coûteuse,
- présence d'une masse inerte qui alourdit le leurre,
- dispositif dont la poussée n'est pas optimale à toutes les altitudes.

Un second problème est d'assurer l'allumage correct du bloc émissif.

En effet selon la pratique courante (voir par exemple le brevet FR 2 294 422) le leurre est allumé par l'intermédiaire de l'ensemble d'éjection. Cet ensemble est actionné par une charge d'éjection et il sert de piston pour éjecter le leurre. Cet ensemble d'éjection comporte au moins un retard pyrotechnique initié par la charge d'éjection. Ce retard pyrotechnique va allumer la charge d'allumage disposée dans le leurre, cette dernière charge assurant la mise à feu du bloc émissif.

Lorsque le leurre est engagé dans le tube de lancement, sa partie avant dirigée vers le fond dudit tube, la disposition précèdemment décrite pour assurer l'éjection du leurre et l'allumage du bloc émissif ne peut être utilisée sans ajouter un dispositif qui réalise la fermeture et l'étanchéité du passage des gaz d'allumage à l'avant du leurre lorsque ce dernier doit fonctionner.

La séparation des deux fonctions, l'une d'éjection du leurre l'autre d'allumage du bloc émissif, va poser deux autres problèmes soit l'alourdissement du leurre lorsque tout un ensemble d'allumage, indépendant du dispositif d'éjection, est placé à l'avant du leurre car il ne sera pas séparable du leurre, soit un allumage moins satisfaisant du bloc émissif lorsque tout l'ensemble d'allumage est installé à l'arrière du leurre pour en être séparé après l'allumage du bloc émissif.

Le brevet FR 1 098 633 dont l'exposé est pris à base du préambule de la revendication indépendante 1, décrit un projectile semi autopropulsé, équipé d'une tuyère et dont l'ensemble d'allumage comporte d'une part un dispositif pyromécanique éjectable logé dans la tuyère et d'autre part une charge principale d'allumage placée à l'avant, un tube placé dans le canal du bloc propulsif et prenant appui sur ces deux éléments d'extrémité les relie. Le problème que pose cet ensemble d'allumage est celui de la destruction et de l'élimination de ce tube et leurs répercussions sur le bon allumage

La présente invention concerne un leurre stabilisé autopropulsé sur une trajectoire et à émission infrarouge dirigée, comprenant un corps comportant une ogive à sa partie avant et ouvert sur sa partie arrière, ledit corps contenant un bloc émissif en substance pyrotechnique comportant un canal central (41) de section sensiblement constante et diamétralement restreint par deux nervures longitudinales (42) et un ensemble d'allumage du dit bloc comprenant d'une part un dispositif pyromécanique éjectable (6,26) situé dans la partie arrière (24) du dit corps et incorporant un initiateur et d'autre part une charge d'allumage (29) située dans la partie avant du dit corps, le dispositif pyromécanique éjectable (6,26) et la charge d'allumage (29) étant placés de part et d'autre du canal (41) du bloc émissif (28,40), le leurre (4,21) étant caractérisé en ce que l'ouverture à sa partie arrière (24) est de section constante et que le dispositif pyromécanique éjectable (6,26) comporte un répartiteur de flamme (27) comportant lui-même deux buses engagées dans le canal central (41) du bloc émissif (28,4) de part et d'autre des nervures longitudinales (42).

L'ogive placée à l'avant du leurre peut être réalisée très simplement par une forme conique dont le sommet est émoussé.

Préférentiellement le bloc émissif du leurre a un élancement initial supérieur ou égal à 3 ; l'élancement est le rapport l/d où 1 représente la longueur initiale du bloc et d son diamètre initial.

Avantageusement le bloc émissif a un canal dont l'aire de passage initiale est inférieure à celle de l'ouverture de la partie arrière du corps du leurre. Avantageusement le bloc émissif a un seul canal, dont l'axe est confondu avec celui du leurre.

La combustion de la substance pyrotechnique produit des gaz et éventuellement des particules. Le débit de ces produits dans le canal augmente de l'amont vers l'aval, ce débit croissant, transitant dans une section de canal constante ou très peu variable, va se faire à une vitesse croissante de l'amont vers l'aval. Lorsque le bloc émissif présente les caractéristiques précèdemment énoncées (élancement supérieur ou égal à 3, conditions sur les aires de passage) à la sortie du canal le jet des produits de combustion est suffisamment rapide pour que la force de réaction qu'il exerce sur le leurre propulse convenablement ce dernier. Dans le cas présent l'accélération des gaz combustion et la propulsion se font sans le recours à une tuyère.
Avantageusement le bloc émissif présente une forme permettant l'obtention de deux paliers de poussée. Le bloc émissif a un canal dont la surface de combustion est élevée en début de combustion. Cette surface de combustion initiale élevée correspond à un fort débit de produits de combustion, donc une forte poussée pour accélérer le leurre sur sa trajectoire. Ensuite, pendant la deuxième phase de la combustion, une surface de combustion plus faible correspondant à une poussée moins importante qui suffit à maintenir le leurre en vitesse pendant cette phase de croisière.

Ces deux régimes de combustion et donc de poussée donnent au leurre une trajectoire adaptée à celle de la plate-forme à protéger : le leurre ne reste pas à la traîne derrière la plate-forme ou ne s'en éloigne pas trop rapidement.

Le bloc émissif du leurre est fabriqué à partir d'un mélange comprenant un liant plastique, au moins un métal réducteur et au moins un oxydant. Le métal réducteur est choisi parmi l'aluminium, le magnésium, le zirconium. L'oxydant est choisi parmi les perchlorates, les nitrates.

La composition peut aussi comporter divers additifs pour améliorer la faisabilité, les propriétés mécaniques, les propriétés cinétiques et les performances de rayonnement.

Le liant plastique peut-être du type thermodurcissable : c'est-à-dire être constitué par un copolymère qui au lieu de fondre sous l'action de la chaleur va durcir. On citera par exemple les phénoplastes, les polyesters, les polyuréthannes, les époxydes. Le liant préféré est un polyuréthanne obtenu par action d'un ou plusieurs polyisocyanates sur un polybutadiène hydroxytéléchélique. Le procédé de mise en oeuvre est celui du malaxage des ingrédients de façon à former une pâte homogène. La mise en forme des blocs se fait par coulée ou injection dans un moule pour le durcissement de la composition. On peut aussi envisager un procédé bicomposant avec injection et mélange des constituants réactifs dans le moule de mise en forme.

Le liant plastique peut aussi être du type thermoplastique c'est-à-dire être constitué par un agrégat de molécules longues qui se ramollit par chauffage et peut ainsi se mouler. Le procédé de mise en oeuvre consiste à enrober des ingrédients (réducteurs et oxydants) dans le liant thermoplastique. La mise en forme des blocs se fait à la presse ou par extrusion.

Les avantages de l'invention apparaissent ainsi clairement :
- par la suppression de la tuyère on simplifie et on allège le leurre dont le fonctionnement se trouve aussi adapté à toutes les altitudes,
- par la forme du bloc (élancement et section) on obtient la poussée sans tuyère,
- par la séparation en deux parties du système d'allumage : d'une part le dispositif pyromécanique à l'arrière, éjectable après fonctionnement et d'autre part la charge d'allumage à l'avant on réalise un allumage du bloc émissif dans de bonnes conditions tout en conservant le bénéfice de l'allègement (élément éjectable),
- la partie arrière qui prolonge le corps assure, vis à vis du vent extérieur, la protection de la flamme rayonnante et maintient l'efficacité de son rayonnement.

Ci-dessous l'invention est exposée plus en détail à l'aide de figures représentant une réalisation particulière.

La figure **1** représente schématiquement et en coupe partielle le leurre objet de l'invention dans son tube de lancement.

La figure **2** schématise le leurre sorti de son tube, ailettes déployées, le dispositif pyromécanique est encore en place.

La figure **3** représente en coupe la partie arrière du leurre.

La figure **4** représente un bloc émissif en substance pyrotechnique.

La figure **5** représente l'évolution calculée de la poussée en fonction du temps.

Un lance-leurres est un dispositif fixé sur la plate-forme à protéger, dans le cas présent un aéronef, et est relié électriquement au poste de pilotage d'où viennent les ordres de tir.

Le lance-leurres comprend notamment des tubes qui servent pour le lancement du leurre ; dans le cas présent nous nous intéresserons à un seul de ces tubes. Ce tube est dirigé vers l'arrière de l'avion avec une certaine inclinaison vis-à-vis du plan vertical médian de l'avion et de son plan horizontal.

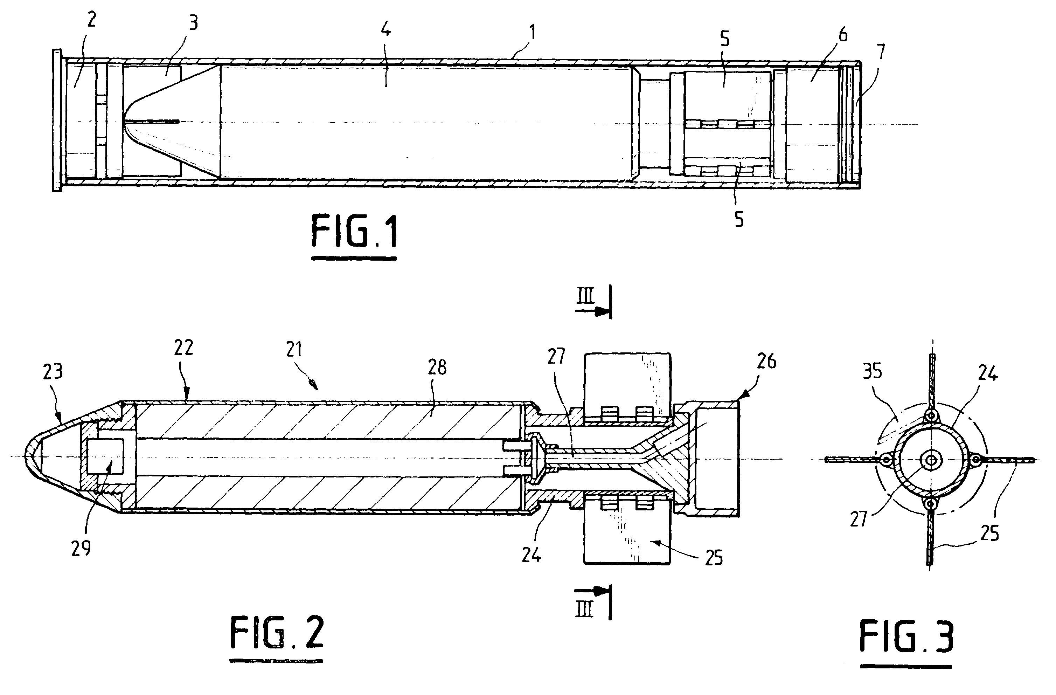

La figure **1** représente un tube de lancement 1 en coupe, un leurre 4, les ailettes stabilisatrices 5 sont repliées, le dispositif pyromécanique 6 est engagé dans la partie arrière du leurre. La charge d'éjection disposée dans un bloc 2 repousse le piston d'éjection 3 qui s'appuie sur l'ogive du leurre. Un opercule étanche 7 ferme la bouche du tube : il est détruit lors de l'éjection du leurre.

La figure **2** représente le leurre après son éjection du tube de lancement : les ailettes stabilisatrices sont déployées et bloquées, le dispositif pyromécanique est encore en place dans la partie arrière. Le leurre 21 comporte un corps 22 sur lequel sont fixés, à l'avant une ogive 23 et, à l'autre extrêmité la partie arrière 24 qui porte les ailettes stabilisatrices 25. Engagé et collé dans la partie arrière 24, se trouve le dispositif pyromécanique 26 prolongé par un répartiteur de flamme 27. A l'intérieur du corps 22 se trouve le bloc émissif 28, en substance pyrotechnique. Vers l'avant du leurre et à l'intérieur de l'ogive dans la même chambre que le bloc, se trouve la charge d'allumage 29.

Le dispositif pyromécanique 26 est éjectable. Il comporte une amorce à percussion qui initie un retard pyrotechnique qui va débiter par le répartiteur de flamme 27. Il comporte aussi des dispositifs de sécurité de fonctionnement, connus par ailleurs et qui ne seront pas décrits plus en détail ici ; ces dispositifs désalignent la chaîne pyrotechnique en cas d'anomalie de fonctionnement.

Le répartiteur de flamme 27 qui se termine ici par deux buses, dirige, à travers le canal (ou les canaux) du bloc émissif 28, la flamme du retard pyrotechnique vers la charge d'allumage 29 et l'initie à son tour.

La charge d'allumage 29 assure alors l'allumage du bloc émissif 28. Les produits de combustion font monter la pression jusqu'à ce qu'elle soit suffisante pour décoller et éjecter le dispositif pyromécanique 26. Le jet des produits de combustion qui s'établie alors va produire l'effet propulsif et le rayonnement.

La figure 3 représente, en coupe, la partie arrière 24 du leurre : on trouve le répartiteur de flamme 27 et les ailettes en position déployées 25. Cette partie arrière est essentiellement circulaire. Son diamètre intérieur est tel que l'aire de passage correspondante est supérieure à l'aire de passage du canal initial du bloc émissif. Le diamètre extérieur de cette partie arrière 24 est inférieure au calibre du leurre (donc au diamètre intérieur du tube de lancement) de telle sorte que lorsque le leurre est engagé dans le tube de lancement (repère 1 de la figure 1) les ailettes sont pliées (repère 35) sur la partie arrière dans le volume annulaire compris entre cette partie arrière et le tube de lancement. Le cercle en trait mixte correspond au cercle de diamètre égal à celui du tube de lancement.

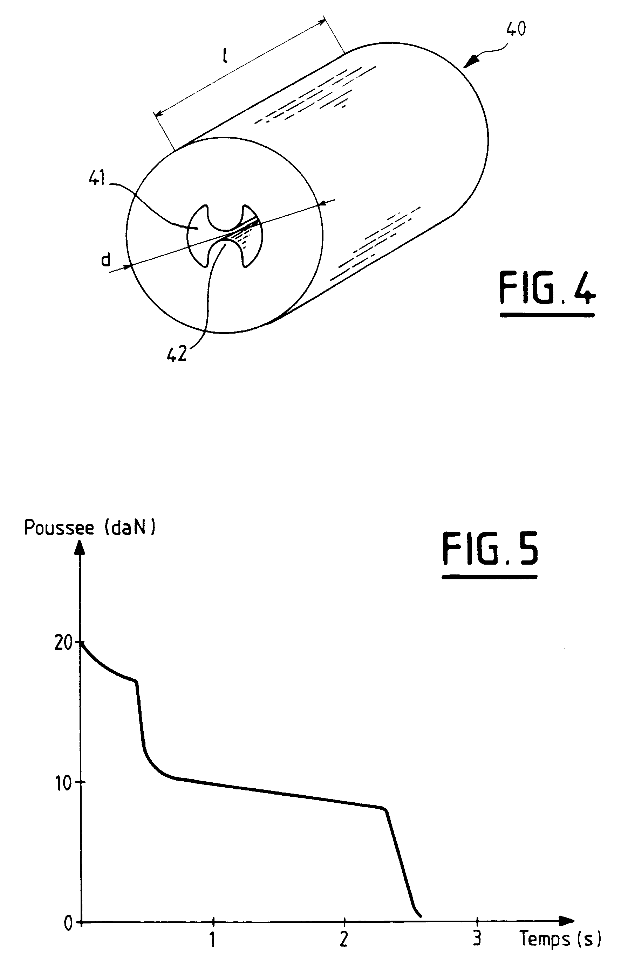

Le figure **4** représente le bloc émissif 40 en substance pyrotechnique. Ce bloc est cylindrique et comporte un canal central 41 à section sensiblement constante avec deux nervures longitudinales 42 . Ces deux nervures longitudinales 42 partagent pratiquement le canal 41 en deux parties ce qui explique les deux buses à l'extémité du répartiteur de flamme, engagées dans le canal pour diriger la flamme à travers chacune des parties du canal délimitées par les nervures longitudinales 42. Ce bloc a un diamètre extérieur de 47 mm pour une longueur de 180 mm : le rapport l/d est supérieur à 3,8. La surface latérale extérieure du bloc émissif est revêtue d'une substance inhibitrice (non représentée sur ce shéma) pour empêcher la combustion de la substance sur cette surface.

La figure **5** représente la poussée en fonction du temps, il s'agit ici d'une prévision calculée. Cette courbe représente un premier palier de poussée élevée qui assure la phase d'accélération du leurre sur sa trajectoire, il correspond à la phase de combustion des nervures longitudinales : la surface de combustion est importante. Le second palier de pousée plus faible correspond à la phase de croisière où le leurre poursuit sa trajectoire à vitesse uniforme, après la combustion des deux nervures longitudinales : la surface de combustion est plus faible.

## Revendications

1. Leurre (4,21) stabilisé autopropulsé et à émission infrarouge dirigée comprenant un corps comportant une ogive à sa partie avant et ouvert sur sa partie arrière (24), ledit corps contenant un bloc émissif (28,40) en substance pyrotechnique comportant un canal central (41) de section sensiblement constante et diamètralement restreint par deux nervures longitudinales (42) et un ensemble d'allumage dudit bloc comprenant d'une part un dispositif pyromécanique éjectable (6,26) situé dans la partie arrière (24) dudit corps et incorporant un initiateur et d'autre part une charge d'allumage (29) située dans la partie avant dudit corps, le dispositif pyromécanique éjectable (6,26) et la charge d'allumage (29) étant placés de part et d'autre du canal (41) du bloc émissif (28,40), le leurre (4,21) étant caractérisé en ce que l'ouverture à sa partie arrière (24) est de section constante et en ce que le dispositif pyromécanique éjectable (6,26) comporte un répartiteur de flamme (27) comportant lui-même deux buses engagées dans le canal central (41) du bloc émissif (28,40) de part et d'autre des nervures longitudinales (42).

2. Leurre selon la revendication 1 caractérisé en ce que le bloc émissif (28,40) a un élancement l/d supérieur ou égal à 3.

3. Leurre selon l'une des revendications 1 ou 2, caractérisé en ce que l'aire de passage initiale du canal du bloc émissif est inférieure à celle de l'ouverture de la partie arrière (24) du leurre.

4. Leurre selon l'une des revendications 1 à 3 caractérisé en que le bloc émissif (28,40) est un mélange comprenant un liant plastique, au moins un métal réducteur et au moins un oxydant.

## Patentansprüche

1. Stabilisiertes Scheinziel (4, 21) mit Eigenantrieb und gerichteter Infrarotemission,
das einen Körper aufweist, der in seinem vorderen Teil eine Geschoßspitze aufweist und am hinteren Teil (24) offen ist und einen Emissionsblock (28, 40) aus einem pyrotechnischen Material, der einen zentralen Kanal (41) mit im wesentlichen gleichbleibendem Querschnitt aufweist, der in Durchmesserrichtung durch zwei einander gegenüberliegende Längsrippen (42) eingeschnürt ist, sowie eine Zündeinheit für den Emissionsblock enthält, die einerseits eine auswerfbare pyromechanische Vorrichtung (6, 26), die sich im hinteren Teil (24) des Körpers befindet und ein Zündstück enthält, und andererseits einen Anzündsatz (29), der sich im vorderen Teil des Körpers befindet, aufweist, wobei die auswerfbare pyromechanische Vorrichtung (6, 26) und der Anzündsatz (29) zu beiden Seiten des Kanals (41) des Emissionsblocks (28, 40) angeordnet sind,
dadurch gekennzeichnet, daß
die Öffnung am hinteren Teil (24) gleichbleibenden Querschnitt besitzt und die auswerfbare pyrotechnische Vorrichtung (6, 26) einen Flammenverteiler (27) aufweist, der seinerseits zwei Düsen besitzt, die im zentralen Kanal (41) des Emissionsblocks (28, 40) zwischen den beiden Längsrippen (42) angeordnet sind.

2. Scheinziel nach Anspruch 1, dadurch gekennzeichnet, daß der Emissionsblock (28, 40) eine Schlankheit l/d ≥ 3 aufweist.

3. Scheinziel nach Anspruch 1 oder 2, dadurch gekennzeichnet, daß die anfängliche Durchtrittsfläche des Kanals des Emissionsblocks kleiner ist als die Durchtrittsfläche der Öffnung des hinteren Teils (24) des Scheinziels.

4. Scheinziel nach einem der Ansprüche 1 bis 3, dadurch gekennzeichnet, daß der Emissionsblock (28, 40) aus einem Gemisch besteht, das ein Kunststoffbindemittel, mindestens ein reduzierendes Metall und mindestens ein Oxidationsmittel enthält.

## Claims

1. Self-propelled stabilized decoy (4, 21) with directed infrared emission comprising a body having an ogive at its front part and having an open rear part (24), the said body containing an emissive block (28, 40) made of a pyrotechnic substance having a central channel (41) with a section which is substantially constant and is diametrically restrained by two longitudinal ribs (42) and an ignition assembly for the said block comprising firstly an ejectable pyromechanical device (6, 26) situated in the rear part (24) of the said body and incorporating an initiator, and secondly an ignition charge (29) situated in the front part of the said body, the ejectable pyromechanical device (6, 26) and the ignition charge (29) being placed either side of the channel (41) of the emissive block (28, 40), the decoy (4, 21) being
characterized in that the opening at its rear part (24) has a constant cross section and in that the ejectable pyromechanical device (6, 26) has a flame distributer (27) itself having two nozzles engaged in the central channel (41) of the emissive block (28, 40) either side of the longitudinal ribs (42).

2. Decoy according to claim 1, characterized in that the emissive block (28, 40) has an aspect ratio l/d greater than or equal to 3.

3. Decoy according to either of claims 1 or 2, characterized in that the initial passageway area of the channel of the emissive block is smaller than that of the opening in the rear part (24) of the decoy.

4. Decoy according to one of claims 1 to 3, characterized in that the emissive block (28, 40) is a mixture comprising a plastic binder, at least one reducing metal and at least one oxidant.
